(19) Europäisches Patentamt
European Patent Office
Office européen des brevets

(11) **EP 4 336 367 A1**

(12) **EUROPEAN PATENT APPLICATION**

(43) Date of publication:
**13.03.2024 Bulletin 2024/11**

(21) Application number: **23168629.6**

(22) Date of filing: **19.04.2023**

(51) International Patent Classification (IPC):
*G06F 11/36* (2006.01)

(52) Cooperative Patent Classification (CPC):
**G06F 11/3696; G06F 11/3672; G06F 11/3688;**
B60W 50/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 KR 20220109732**

(71) Applicant: **Korea Electronics Technology Institute
Bundang-gu, Seongnam-si
Gyeonggi-do
13509 (KR)**

(72) Inventors:
• **SHIM, Young Bo**
Seongnam-si, Gyeonggi-do 13604 (KR)
• **MIN, Kyoung Won**
Seongnam-si, Gyeonggi-do 13581 (KR)
• **SON, Haeng Seon**
Seongnam-si, Gyeonggi-do 13588 (KR)
• **LEE, Seon Young**
Seoul 04717 (KR)
• **PARK, Chang Gue**
Seoul 06373 (KR)

(74) Representative: **Isarpatent
Patent- und Rechtsanwälte Barth
Charles Hassa Peckmann & Partner mbB
Friedrichstrasse 31
80801 München (DE)**

(54) **VIL SYSTEM BASED AUTONOMOUS DRIVING FUNCTION VERIFICATION METHOD**

(57) There is provided a VIL system-based autonomous driving function verification method. According to embodiments of the disclosure, a VIL system enables an autonomous vehicle to verify an autonomous driving function by interlocking with a virtual road environment in any other place, without having to go to a real test road corresponding to a simulated virtual road environment. Accordingly, an autonomous driving function can be rapidly verified based on a VIL system with respect to various virtual road environments without changing a driving place, so that speed and convenience in development of autonomous driving technology can be enhanced.

FIG. 2

EP 4 336 367 A1

**Description**

**CROSS-REFERENCE TO RELATED APPLICATION(S) AND CLAIM OF PRIORITY**

This application is based on and claims priority under 35 U.S.C. § 119 to Korean Patent Application No. 10-2022-0109732, filed on August 31, 2022, in the Korean Intellectual Property Office, the disclosure of which is herein incorporated by reference in its entirety.

**BACKGROUND**

FIELD

The disclosure relates to a method for verifying a function of an autonomous vehicle, and more particularly, to a vehicle-in-the-loop (VIL)-based autonomous driving function verification system and method which interlocks an autonomous vehicle and a simulator.

DESCRIPTION OF RELATED ART

Real vehicle-based verification may be used for verifying an advanced driver assistance system (ADAS) or an autonomous driving function. However, this method has a limit to verifying all road situations and may be used in parallel with simulator-based verification.

An autonomous driving simulator verifies a function of a recognition/determination/control algorithm for autonomous driving through a simulation in which a virtual autonomous vehicle travels in a virtual road environment. However, this method has a limit to completely simulating performance or a state of an autonomous vehicle really running. Accordingly, a VIL system-based autonomous driving function verification method which verifies in combination of a simulator and a really running autonomous vehicle may be used.

A virtual road environment which is utilized for related-art VIL system-based autonomous driving function verification is a simulated environment of a test road environment in which an autonomous vehicle will really travel, such as a proving ground (PG). Accordingly, in the related-art VIL system, a real position/posture of the autonomous vehicle may be used as a virtual position/posture of a virtual autonomous vehicle in the virtual road environment.

As described above, the related-art VIL system-based autonomous driving function verification may have a great limit on the virtual road environment. That is, it is very inconvenient to verify in various virtual road environments. This is because the autonomous vehicle should be driven only on the real road corresponding to the simulated virtual road.

As the level of autonomous driving is enhanced, autonomous driving function verification in a complex road environment is increasingly demanded. To this end, the related-art VIL system should newly establish a test road or should change the test road every time a different road environment for verification is required, and accordingly, there may be huge temporal and financial burdens.

**SUMMARY**

The disclosure has been developed in order to solve the above-described problems, and an object of the disclosure is to provide a VIL system-based autonomous driving performance verification method by which an autonomous vehicle can verify autonomous driving performance even when a virtual road environment is created based on a certain target area without simulating a real test road such as a PG.

According to an embodiment of the disclosure to achieve the above-described object, an autonomous driving simulator may include: a road environment DB configured to store information on a road environment; a simulation engine configured to create a simulation scenario for verifying autonomous driving performance, by creating a virtual road environment by using the information stored in the road environment DB, specifying a position and posture of a virtual autonomous vehicle, and generating a virtual NPC object; a rendering module configured to render a virtual road environment according to the scenario created by the simulation engine; an emulation module to generate virtual sensor data by emulating sensors mounted in the virtual autonomous vehicle in the virtual road environment rendered by the rendering module; a calculation module configured to convert a real position and posture of an autonomous vehicle into a position and posture of the virtual autonomous vehicle in the virtual road environment, and to transmit the converted position and posture to the simulation engine; and an interlocking module configured to transmit the virtual sensor data generated by the emulation module to the autonomous vehicle, to receive a real position and posture of the autonomous vehicle from the autonomous vehicle, and to transmit the real position and posture to the calculation module.

The real position and posture of the autonomous vehicle may be different from a virtual position and posture of the virtual autonomous vehicle.

A road on which the autonomous vehicle travels may be different from a road information of which is stored in the road environment DB. When the road on which the autonomous vehicle travels is not changed, the road the information of which is stored in the road environment DB may be changeable.

The road the information of which is stored in the road environment DB may include a virtual road and an existent road. The existent road may be a road on which the autonomous vehicle really travels to verify a function, and may include a proving ground (PG), a normal road, and a highway.

The calculation module may convert a real position and direction of the autonomous vehicle into a virtual position and direction of the virtual autonomous vehicle in the virtual road environment. The calculation module may calculate a virtual posture of the virtual autonomous vehicle, based on the virtual position and direction, with reference to information on a road shape which is stored in the road environment DB.

When there is an initialization command, the calculation module may initialize the real position and posture of the autonomous vehicle and the position and posture of the virtual autonomous vehicle, and may initiate conversion.

According to another embodiment of the disclosure, an autonomous driving simulation method may include: creating, by an autonomous driving simulator, a simulation scenario for verifying autonomous driving performance, by creating a virtual road environment, specifying a position and posture of a virtual autonomous vehicle, and generating a virtual NPC object; rendering, by the autonomous driving simulator, a virtual road environment according to the generated scenario; generating, by the autonomous driving simulator, virtual sensor data by emulating sensors mounted in the virtual autonomous vehicle in the rendered virtual road environment; transmitting, by the autonomous driving simulator, the generated virtual sensor data to the autonomous vehicle, and receiving a real position and posture of the autonomous vehicle from the autonomous vehicle; and converting, by the autonomous driving simulator, the real position and posture of the autonomous vehicle received into a position and posture of the virtual autonomous vehicle in the virtual road environment.

According to still another embodiment of the disclosure, an autonomous driving simulator may include: a simulation engine configured to create a simulation scenario for verifying autonomous driving performance, by creating a virtual road environment and specifying a position and posture of a virtual autonomous vehicle; a calculation module configured to convert a real position and posture of an autonomous vehicle into a position and posture of the virtual autonomous vehicle in the virtual road environment, and to transmit the converted position and posture to the simulation engine; and an interlocking module configured to receive a real position and posture of the autonomous vehicle from the autonomous vehicle, and to transmit the real position and posture to the calculation module.

According to yet another embodiment of the disclosure, an autonomous driving simulation method may include: transmitting, by an autonomous driving simulator, virtual sensor data to an autonomous vehicle, and receiving a real position and posture of the autonomous vehicle from the autonomous vehicle; converting, by the autonomous driving simulator, the real position and posture of the autonomous vehicle into a position and posture of a virtual autonomous vehicle in a virtual road environment; and creating, by the autonomous driving simulator, a simulation scenario for verifying autonomous driving performance in the virtual road environment, based on the converted position and posture of the virtual autonomous vehicle.

As described above, according to embodiments of the disclosure, an autonomous vehicle can verify an autonomous driving function by interlocking with a virtual road environment in any other place, without having to go to a real test road corresponding to a simulated virtual road environment.

In addition, according to embodiments of the disclosure, an autonomous driving function can be rapidly verified based on a VIL system with respect to various virtual road environments without changing a driving place, so that speed and convenience in development of autonomous driving technology can be enhanced.

Other aspects, advantages, and salient features of the invention will become apparent to those skilled in the art from the following detailed description, which, taken in conjunction with the annexed drawings, discloses exemplary embodiments of the invention.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

## BRIEF DESCRIPTION OF THE DRAWINGS

For a more complete understanding of the present disclosure and its advantages, reference is now made to

**EP 4 336 367 A1**

the following description taken in conjunction with the accompanying drawings, in which like reference numerals represent like parts:

FIG. 1 is a view illustrating a configuration of a VIL system according to an embodiment of the disclosure;
FIG. 2 is a view provided to explain a method for converting a real position/direction into a virtual position/direction;
FIG. 3 is a view provided to explain a method for synchronizing position/posture information in a VIL mode; and
FIG. 4 is a view provided to explain a method for synchronizing position/posture information in a mode other than the VIL mode.

## DETAILED DESCRIPTION

Hereinafter, the disclosure will be described in more detail with reference to the accompanying drawings.

An embodiment of the disclosure proposes a VIL system-based autonomous driving function verification method. Specifically, the disclosure relates to a method which enables autonomous driving function verification based on a VIL system even when an autonomous vehicle is on a road or in a place other than a real road corresponding to a simulated virtual road environment.

According to an embodiment of the disclosure, VIL system-based autonomous driving function verification is possible without limitation to a real road on which an autonomous vehicle travels, that is, regardless of where an autonomous vehicle travels.

To achieve this, the method according to an embodiment may include: establishing a virtual road simulating a road where an autonomous vehicle will travel as a digital twin, converting a real position/posture of the autonomous vehicle into a virtual position/posture in the virtual road environment and synchronizing a position/posture of the autonomous vehicle on the real road and a position/posture of a virtual autonomous vehicle on the virtual road.

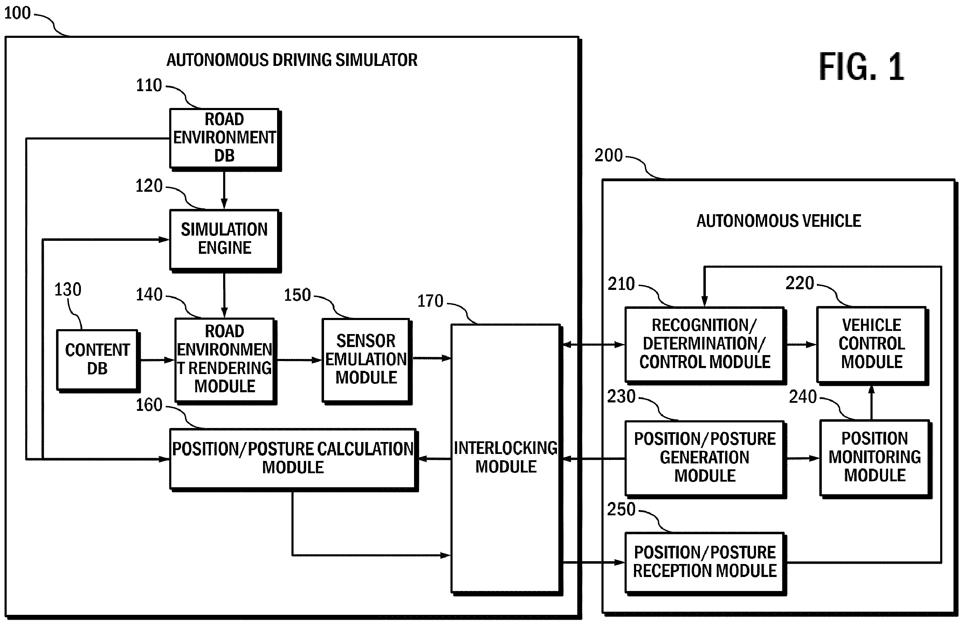

FIG. 1 is a view illustrating a configuration of a VIL system according to an embodiment of the disclosure. The VIL system according to an embodiment may include an autonomous driving simulator 100 and an autonomous vehicle 200.

The autonomous driving simulator 100 may refer to a computing system that creates a virtual road environment simulating an existent road environment as a digital twin in order to provide a virtual road environment for verifying a function of the autonomous vehicle 200.

The autonomous vehicle 200 may travel while controlling according to the virtual road environment created in the autonomous driving simulator 100. A place where the autonomous vehicle 200 really travels may be a road or place other than the existent road corresponding to the simulated virtual road environment, that is, a road or a wide empty lot where vehicles do not travel.

Accordingly, since a real position/posture of the autonomous vehicle 200 may be different from a virtual position/posture of a virtual autonomous vehicle simulating the autonomous vehicle 200 on the virtual environment road, the autonomous driving simulator 100 may convert the real position/posture of the autonomous vehicle 200 into the virtual position/posture of the virtual autonomous vehicle.

Hereinafter, components of the autonomous driving simulator 100 will be described in detail. The autonomous driving simulator 100 may include a road environment database (DB) 110, a simulation engine 120, a content DB 130, a road environment rendering module 140, a sensor simulation module 150, a position/posture calculation module 160, and an interlocking module 170, as shown in FIG. 1.

The road environment DB 110 may store, as information on an environment of an existent road, information on a road (road shape, road width, the number of lanes), traffic lights, static objects (street trees, streetlamps, buildings, etc.).

The road the information of which is stored in the road environment DB 110 may be a road where the autonomous vehicle 200 performs function verification while really traveling, and for example, may be a proving ground (PG) or a real road. If the road is a real road, the real road includes all types of roads including a normal road and a highway.

The road the information of which is stored in the road environment DB 110 may be a road on which the autonomous vehicle 200 really travels, but it should be noted that the autonomous vehicle 200 in an embodiment of the disclosure does not travel on this road and travels on any other road or place.

The road the information of which is stored in the road environment DB 110 may be determined according to needs or purposes and may be changeable, correctable, editable.

The simulation engine 120 may create a simulation scenario for autonomous driving performance verification by creating a virtual road environment by using the road environment DB 110, specifying a position/posture of the virtual autonomous vehicle, and generating a non-player character (NPC) object.

The NPC object may refer to a dynamic object other than the virtual autonomous vehicle in the virtual road environment, such as other vehicles, a person, an animal. In the simulation scenario, the NPC object moves and may cause an accident not only by a normal movement but also by an abnormal movement.

4

The content DB 130 may store contents that are needed to construct a road environment stored in the road environment DB 110 as a virtual environment, that is, a digital twin of a real rod, and to add NPCs to the virtual environment.

The road environment rendering module 140 may render the virtual road environment according to the scenario created by the simulation engine 120, by using the contents stored in the content DB 130.

The sensor emulation module 150 may generate virtual sensor data by emulating a camera, a light detection and ranging (LiDAR), a radio detecting and ranging (RADAR), a global navigation satellite systems (GNSS)/inertial navigation system (INS), vehicle-to-everything (V2X), which are sensors mounted in the virtual autonomous vehicle, in the virtual road environment rendered by the road environment rendering module 140.

The sensors mounted in the virtual autonomous vehicle in which virtual sensor data is generated by the sensor emulation module 150 may be implemented in the same way as sensors really mounted in the autonomous vehicle 200.

The position/posture calculation module 160 may convert a real position/posture of the autonomous vehicle 200 into a position/posture in the virtual road environment. In the case of related-art VIL system-based verification, a real position/posture of the autonomous vehicle 200 and a virtual position/posture of the virtual autonomous vehicle in the virtual road environment are consistent with each other. However, since both positions/postures are not consistent with each other in the embodiment of the disclosure, it is necessary for the position/posture calculation module 160 to convert the position/posture.

The interlocking module 170 transmits the virtual sensor data generated by the sensor emulation module 150 and the virtual position/posture information calculated by the position/posture calculation module 160 to the autonomous vehicle 200.

Hereinafter, components of the autonomous vehicle 200 will be described in detail. The autonomous vehicle 200 may include a recognition/determination/control module 210, a vehicle control module 220, a position/posture generation module 230, a position monitoring module 240, and a position/posture reception module 250 as shown in FIG. 1.

The position/posture generation module 230 may measure a real position/posture of the autonomous vehicle 200 by using a sensor such as a GNSS sensor, an inertial measurement unit (IMU), an INS, etc., or may estimate through a recognition algorithm.

The real position/posture information generated through measurement/estimation by the position/posture generation module 230 may be transmitted to the position/posture calculation module 160 through the interlocking module 170 of the autonomous driving simulator 100, and may be converted into virtual position/posture information of the autonomous vehicle in the virtual road environment.

The position/posture reception module 250 may receive virtual position/posture information which is calculated by the position/posture calculation module 160 of the autonomous driving simulator 100, and may transmit the same to the recognition/determination/control module 210.

The recognition/determination/control module 210 may recognize/determine a vehicle state and a road situation according to an autonomous driving algorithm, based on the virtual sensor data received through the interlocking module 170 and the virtual position/posture information transmitted through the position/posture reception module 250, and may generate a control command for the autonomous vehicle 200.

The vehicle control module 220 may control real driving of the autonomous vehicle 200 according to the control command generated in the autonomous vehicle 200.

The position monitoring module 240 may detect whether the real position of the autonomous vehicle 200 measured/estimated by the position/posture generation module 230 deviates from a drivable place. To achieve this, the position monitoring module 240 may retain/utilize an electronic map.

Autonomous driving control by the recognition/determination/control module 210 may be performed with reference to a virtual position in the virtual road environment. Accordingly, a position in the virtual road environment may be a position where the virtual autonomous vehicle is able to travel, but a corresponding real position in the real driving place may be a position where driving is impossible. In this case, the position monitoring module 240 may stop the autonomous vehicle 200 through the vehicle control module 220. Furthermore, in this case, position initialization may be required as will be described below.

Hereinafter, a method for converting a real position/posture of the autonomous vehicle 200 into a virtual position/posture of the virtual autonomous vehicle in the virtual road environment by the position/posture calculation module 160 will be described in detail.

First, the position/posture calculation module 160 may initialize a position and direction of the autonomous vehicle 200 and a virtual position and direction of the virtual autonomous vehicle. When an initialization command is generated through an initialization button, etc., a position and posture may be initialized and conversion may be initiated. The initialization refers to setting a current position and direction of the autonomous vehicle 200 to an initial real position and direction at the time of initialization, and setting a current position and direction of the virtual autonomous vehicle to an initial virtual position and direction.

When the position monitoring module 240 monitors that the autonomous vehicle 200 deviates from a drivable place, the initialization may be performed after the autonomous vehicle 200 moves to a drivable place. In this case, a position and direction in which the autonomous vehicle 200 moves may be set to an initial real position and direction, and a final position and direction of the virtual autonomous vehicle may be set to an initial virtual position and direction. Since the virtual autonomous vehicle does not move, the final position and direction of the virtual autonomous vehicle is set to the initial virtual position and direction.

A direction to be initialized refers to yaw among the postures (roll, pitch, yaw) of a vehicle. Yaw refers to rotation around a z-axis which is perpendicular to a plane of a road.

Thereafter, the position/posture calculation module 160 may calculate an initial virtual posture, based on the initial virtual position and direction of the virtual autonomous vehicle, with reference to information on a road shape in the information on the road environment, which is stored in the road environment DB 110. Since a shape of a real road on which the autonomous vehicle 200 travels is unrelated to a shape of a virtual road on which the virtual autonomous vehicle travels, it is impossible to directly convert/calculate a virtual posture from a real posture without referring to the road environment DB 110.

When the autonomous vehicle 200 starts traveling after initialization, the position/posture calculation module 160 may calculate a virtual position and direction of the virtual autonomous vehicle, based on a change in the real position and direction of the autonomous vehicle 200.

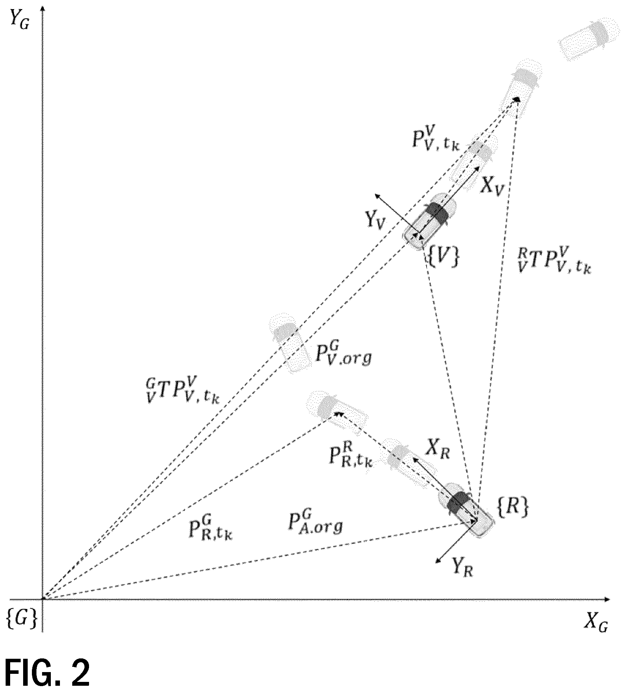

FIG. 2 illustrates an initial real position ( $P_{R.org}^{G}$ ) on a coordinate system {R} of a real road environment, and a real position ( $P_{R,t_k}^{G}$ ) to which the autonomous vehicle 200 moves through driving, and illustrates an initial virtual position ( $P_{V.org}^{G}$ ) on a coordinate system {V} of a virtual road environment, and a virtual position ( $P_{V,t_k}^{G}$ ) to which the autonomous vehicle 200 moves through driving.

A change ( $P_{R,t_k}^{R}$ ) in the position of the autonomous vehicle 200 on the coordinate system {R} may be calculated as shown in the following equation:

$$P_{R,t_k}^{R} = {}_{G}^{R}R(P_{R,t_k}^{G} - P_{R.org}^{G})$$

A change $P_{V,t_k}^{V}$ in the position of the virtual autonomous vehicle on the coordinate system {V} may be the same as the change ( $P_{R,t_k}^{R}$ ) in the position of the autonomous vehicle 200 as shown in the following equation:

$$P_{R,t_k}^{R} = P_{V,t_k}^{V}$$

In addition, the virtual position $P_{V,t_k}^{G}$ ) to which the autonomous vehicle 200 moves through driving may be calculated as shown in the following equation:

$$P_{V,t_k}^{G} = P_{V,t_k}^{V} + P_{V.org}^{G} = P_{R,t_k}^{R} + P_{V.org}^{G} = {}_{G}^{R}R(P_{R,t_k}^{G} - P_{R.org}^{G}) + P_{V.org}^{G}$$

Furthermore, FIG. 2 illustrates a result of calculating a virtual direction of the autonomous vehicle based on a change in the direction of the autonomous vehicle 200. When a change in the real direction of the autonomous vehicle 200 is reflected on the initial virtual direction of the virtual autonomous vehicle, the virtual direction of the virtual autonomous vehicle may be calculated.

Next, the position/posture calculation module 160 may calculate a virtual posture based on the virtual position and direction of the virtual autonomous vehicle, with reference to the information on the road shape in the information on the road environment, which is stored in the road environment DB 110.

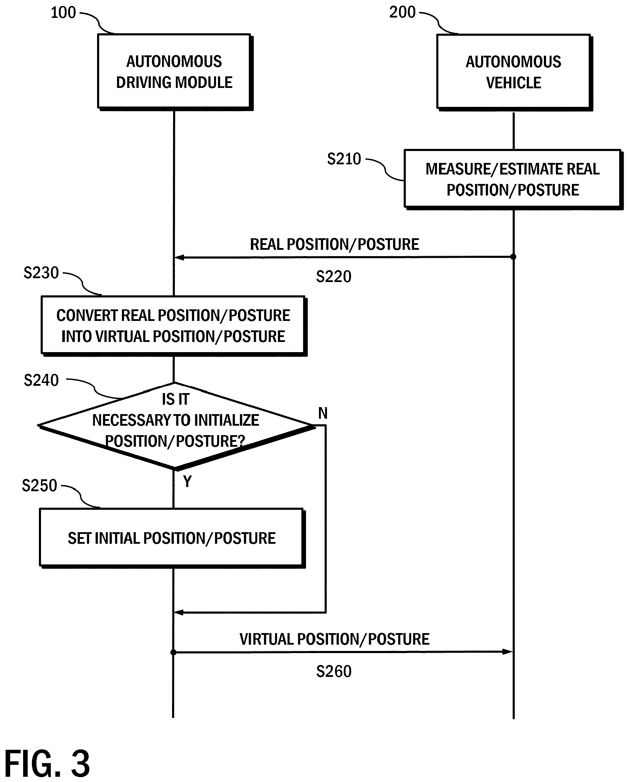

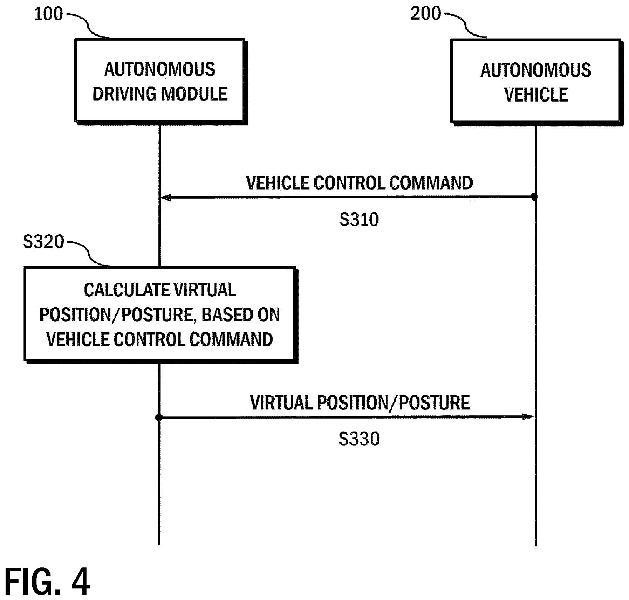

Hereinafter, a method for synchronizing position/posture information between the autonomous driving simulator 100 and the autonomous vehicle 200 in the VIL system shown in FIG. 1 will be described with reference to FIGS. 3 and 4.

FIG. 3 is a view provided to explain a method for synchronizing position/posture information in a VIL mode. The VIL mode is a mode in which an autonomous driving function is verified based on a VIL system, and the above-described contents have been described on the assumption of the VIL mode.

As shown in FIG. 3, the position/posture generation module 230 of the autonomous vehicle 200 may measure/estimate a real position/posture of the autonomous vehicle 200 (S210), and may transmit the measured/estimated real position/posture to the position/posture calculation module 160 through the interlocking module 170 of the autonomous driving simulator 100 (S220).

Then, the position/posture calculation module 160 may convert the real position/posture of the autonomous vehicle 200, received at step S220, into a virtual position/posture of the virtual autonomous vehicle on the virtual road environment (S230). Since the real position/posture is converted into the virtual position/posture in the VIL mode, dynamic characteristics of the autonomous vehicle 200 are not reflected.

When it is necessary to initialize the position/posture (S240-Y), the position/posture calculation module 160 may set the real position/posture of the autonomous vehicle 200, received at step S220, to an initial position/posture of the autonomous driving simulator 100, and may set the virtual position/posture converted at step S230 to an initial position/posture of the virtual autonomous vehicle (S250).

When the VIL modes is initiated or the vehicle deviates from a drivable place, position/posture initialization should be performed. When it is not necessary to initialize the position/posture (S240-N), step S250 may not be performed.

Next, the position/posture calculation module 160 may transmit the virtual position/posture information converted at step S230 to the position/posture reception module 250 of the autonomous vehicle 200 through the interlocking module 170 (S260).

FIG. 4 is a view provided to explain a method for synchronizing position/posture information in a mode other than the VIL mode. As shown in FIG. 4, the recognition/determination/control module 210 of the autonomous vehicle 200 may transmits a vehicle control command to the position/posture calculation module 160 through the interlocking module 170 of the autonomous driving simulator 100 (S310).

Then, the position/posture calculation module 160 of the autonomous driving simulator 100 may calculate a position/posture by analyzing dynamic characteristics of the autonomous vehicle based on the vehicle control command received at step S310, and estimating a movement of the vehicle (S320).

The position/posture calculation module 160 may transmit the position/posture information calculated at step S320 to the position/posture reception module 250 of the autonomous vehicle 200 through the interlocking module 170 (S330).

Up to now, a VIL system-based autonomous driving function verification function has been described with reference to preferred embodiments.

Embodiments of the disclosure propose a method whereby an autonomous vehicle can verify autonomous driving performance based on a VIL system in any other place, without having to go to a real test road such as a PG corresponding to a simulated virtual road environment.

Through this method, an autonomous driving function can be rapidly verified based on the VIL system with respect to various virtual road environments without changing a driving place, so that speed and convenience in development of autonomous driving technology can be enhanced.

In particular, in embodiments of the disclosure, the road the information of which is stored in the road environment DB 110 may be changed even when a road on which the autonomous vehicle travels is not changed, and accordingly, autonomous driving performance verification on various virtual roads may be performed easily and rapidly.

In addition, in the above-described embodiments, it is assumed that the road the information of which is stored in the road environment DB 110 is an existent road. However, information on a virtual road may be stored in the road environment DB 110 and may be used for verifying autonomous driving performance.

The technical concept of the present disclosure may be applied to a computer-readable recording medium which records a computer program for performing the functions of the apparatus and the method according to the present embodiments. In addition, the technical idea according to various embodiments of the present disclosure may be implemented in the form of a computer readable code recorded on the computer-readable recording medium. The computer-readable recording medium may be any data storage device that can be read by a computer and can store data. For example, the computer-readable recording medium may be a read only memory (ROM), a random access memory (RAM), a CD-ROM, a magnetic tape, a floppy disk, an optical disk, a hard disk drive, or the like. A computer readable code or program that is stored in the computer readable recording medium may be transmitted via a network connected between computers.

In addition, while preferred embodiments of the present disclosure have been illustrated and described, the present disclosure is not limited to the above-described specific embodiments. Various changes can be made by a person skilled in the at without departing from the scope of the present disclosure claimed in claims, and also, changed embodiments should not be understood as being separate from the technical idea or prospect of the present disclosure.

**Claims**

1. An autonomous driving simulator comprising:

   a road environment DB configured to store information on a road environment;
   a simulation engine configured to create a simulation scenario for verifying autonomous driving performance, by creating a virtual road environment by using the information stored in the road environment DB, specifying a position and posture of a virtual autonomous vehicle, and generating a virtual NPC object;
   a rendering module configured to render a virtual road environment according to the scenario created by the simulation engine;
   an emulation module to generate virtual sensor data by emulating sensors mounted in the virtual autonomous vehicle in the virtual road environment rendered by the rendering module;
   a calculation module configured to convert a real position and posture of an autonomous vehicle into a position and posture of the virtual autonomous vehicle in the virtual road environment, and to transmit the converted position and posture to the simulation engine; and
   an interlocking module configured to transmit the virtual sensor data generated by the emulation module to the autonomous vehicle, to receive a real position and posture of the autonomous vehicle from the autonomous vehicle, and to transmit the real position and posture to the calculation module.

2. The autonomous driving simulator of claim 1, wherein the real position and posture of the autonomous vehicle is different from a virtual position and posture of the virtual autonomous vehicle.

3. The autonomous driving simulator of claim 2, wherein a road on which the autonomous vehicle travels is different from a road information of which is stored in the road environment DB.

4. The autonomous driving simulator of claim 3, wherein, when the road on which the autonomous vehicle travels is not changed, the road the information of which is stored in the road environment DB is changeable.

5. The autonomous driving simulator of claim 1, wherein the road the information of which is stored in the road environment DB comprises a virtual road and an existent road.

6. The autonomous driving simulator of claim 5, wherein the existent road is a road on which the autonomous vehicle really travels to verify a function, and comprises a proving ground (PG), a normal road, and a highway.

7. The autonomous driving simulator of claim 1, wherein the calculation module is configured to convert a real position and direction of the autonomous vehicle into a virtual position and direction of the virtual autonomous vehicle in the virtual road environment.

8. The autonomous driving simulator of claim 7, wherein the calculation module is configured to calculate a virtual posture of the virtual autonomous vehicle, based on the virtual position and direction, with reference to information on a road shape which is stored in the road environment DB.

9. The autonomous driving simulator of claim 1, wherein the calculation module is configured to, when there is an initialization command, initialize the real position and posture of the autonomous vehicle and the position and posture of the virtual autonomous vehicle, and to initiate conversion.

10. An autonomous driving simulation method comprising:

    creating, by an autonomous driving simulator, a simulation scenario for verifying autonomous driving performance, by creating a virtual road environment, specifying a position and posture of a virtual autonomous vehicle, and generating a virtual NPC object;
    rendering, by the autonomous driving simulator, a virtual road environment according to the generated scenario;
    generating, by the autonomous driving simulator, virtual sensor data by emulating sensors mounted in the virtual autonomous vehicle in the rendered virtual road environment;
    transmitting, by the autonomous driving simulator, the generated virtual sensor data to the autonomous vehicle, and receiving a real position and posture of the autonomous vehicle from the autonomous vehicle; and
    converting, by the autonomous driving simulator, the real position and posture of the autonomous vehicle received into a position and posture of the virtual autonomous vehicle in the virtual road environment.

11. An autonomous driving simulator comprising:

a simulation engine configured to create a simulation scenario for verifying autonomous driving performance, by creating a virtual road environment and specifying a position and posture of a virtual autonomous vehicle;
a calculation module configured to convert a real position and posture of an autonomous vehicle into a position and posture of the virtual autonomous vehicle in the virtual road environment, and to transmit the converted position and posture to the simulation engine; and
an interlocking module configured to receive a real position and posture of the autonomous vehicle from the autonomous vehicle, and to transmit the real position and posture to the calculation module.

# FIG. 1

**AUTONOMOUS VEHICLE** 200

RECOGNITION/DETERMINATION/CONTROL MODULE 210

VEHICLE CONTROL MODULE 220

POSITION/POSTURE GENERATION MODULE 230

POSITION MONITORING MODULE 240

POSITION/POSTURE RECEPTION MODULE 250

**AUTONOMOUS DRIVING SIMULATOR** 100

ROAD ENVIRONMENT DB 110

SIMULATION ENGINE 120

CONTENT DB 130

ROAD ENVIRONMENT RENDERING MODULE 140

SENSOR EMULATION MODULE 150

POSITION/POSTURE CALCULATION MODULE 160

INTERLOCKING MODULE 170

10

**FIG. 2**

100 —⌐

AUTONOMOUS
DRIVING MODULE

200 —⌐

AUTONOMOUS
VEHICLE

S210 —⌐ MEASURE/ESTIMATE REAL
POSITION/POSTURE

REAL POSITION/POSTURE

S220

S230 —⌐

CONVERT REAL POSITION/POSTURE
INTO VIRTUAL POSITION/POSTURE

S240 —⌐

IS IT
NECESSARY TO INITIALIZE
POSITION/POSTURE?

N

S250 —⌐

SET INITIAL POSITION/POSTURE

Y

VIRTUAL POSITION/POSTURE

S260

FIG. 3

FIG. 4

Europäisches
Patentamt

European
Patent Office

Office européen
des brevets

# EUROPEAN SEARCH REPORT

Application Number

EP 23 16 8629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 102 139 513 B1 (UNIV KOOKMIN IND ACAD COOP FOUND [KR]) 12 August 2020 (2020-08-12) | 1-6,9-11 | INV. G06F11/36 |
| Y | * paragraph [0001] - paragraph [0027] * * paragraph [0032] - paragraph [0082] * * the whole document * | 7,8 | |
| Y | KR 2020 0094593 A (KOREA AUTOMOTIVE TECH INST [KR]) 7 August 2020 (2020-08-07) * paragraph [0001] - paragraph [0026] * * paragraph [0034] - paragraph [0063] * * paragraph [0083] - paragraph [0085]; claims 4-8 * * the whole document * | 1-11 | |
| Y | WO 2018/204544 A1 (UNIV MICHIGAN REGENTS [US]) 8 November 2018 (2018-11-08) * the whole document * | 1-11 | |
| A | Scott Schnelle ET AL: "Review of Simulation Frameworks and Standards Related to Driving Scenarios - DOT HS 812 815", Reports of US Department of transportation - National Highway Traffic Safety Administration, 1 December 2019 (2019-12-01), pages 1-40, XP055703689, Washington, DC, US Retrieved from the Internet: URL:https://rosap.ntl.bts.gov/view/dot/436 21 [retrieved on 2020-06-10] * the whole document * | 1-11 | TECHNICAL FIELDS SEARCHED (IPC) G06F B60W |

The present search report has been drawn up for all claims

| Place of search | Date of completion of the search | Examiner |
|---|---|---|
| Munich | 31 January 2024 | Bozas, Ioannis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 8629

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2024

| Patent document cited in search report | | Publication date | Patent family member(s) | | Publication date |
|---|---|---|---|---|---|
| KR 102139513 | B1 | 12-08-2020 | NONE | | |
| KR 20200094593 | A | 07-08-2020 | NONE | | |
| WO 2018204544 | A1 | 08-11-2018 | CN | 111226268 A | 02-06-2020 |
| | | | EP | 3613031 A1 | 26-02-2020 |
| | | | US | 2020065443 A1 | 27-02-2020 |
| | | | WO | 2018204544 A1 | 08-11-2018 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220109732